# EUROPEAN PATENT SPECIFICATION

(11) **EP 1 346 794 B1**
(45) Date of publication and mention of the grant of the patent: **20.02.2008**
(21) Application number: 03004288.1
(22) Date of filing: 27.02.2003
(51) Int. Cl.: B23Q 3/06

(54) **Modular structure particularly for mounting blanks on retainers**
Modulare Strukturvorrichtung zum Spannen von Werkstücken
Structure modulaire pour la fixation de pièces

(30) Priority: 19.03.2002 IT TV20020028
(43) Date of publication of application: 24.09.2003
(73) Proprietor: FCS System s.r.l., 31032 Casale sul Sile TV (IT)
(72) Inventor: Almerino, Canuto, 31032 Casale sul Sile (TV) (IT)
(74) Representative: Modiano, Micaela Nadia

(56) References cited:
- US-A- 5 630 577
- US-A- 5 887 733
- US-B1- 6 244 780

## Description

The present invention relates to a modular structure particularly for mounting blanks on retainers (see, for example, US-5 887 733-A).

Currently, the execution of certain operations, such as for example painting, cleaning and assembly operations, or the execution of various processes, such as for example chip-forming machining, require locking the part and/or blank in a position suitable for treating it.

In the field of chip-forming machining processes, it is certainly known to use machine tools such as, for example, lathes, milling machines, drilling machines and grinding machines.

These machines are usually used in fields characterized by productions of various products or blanks in small batches.

In many circumstances, the use of such machine tools is indispensable specifically in the production of individual custom-made parts.

This leads to the need to organize a production facility that is particularly versatile, i.e., adaptable to the production of a plurality of mutually different products, manufactured mostly as one-off parts or in a very small number of units, in most cases.

This kind of facility, commonly known as "job shop", is in practice the stereotype of the production method that is diametrically opposite to mass-production.

Mass-production consists in producing a small number of different product types, but each type is duplicated on a vast scale in large quantities that can vary from thousands to millions of batches.

Whereas in mass-production the production process is commonly automated by means of a suitable arrangement of adapted machines connected sequentially to each other, the same cannot be said for custom manufacturing.

In this last circumstance, the need to have a flexible production facility, i.e., a facility that is potentially adaptable to the manufacture of many product types, prevents the possibility to fully automate production by means of an organization of the facility that is suitable to obtain a single type of product.

In the field of custom manufacturing, the lack of absolute automation therefore makes manual interventions important.

In particular, it is important to note that the part to be machined is positioned and fixed on the machine tool manually.

In mass-production, instead, the same preliminary operations are performed automatically by anthropomorphic mechanical arms or robots with a plurality of degrees of freedom.

In the field of the use of machine tools commonly used in a facility of the job shop type, it is certainly known to use vises or other manual device suitable to allow the positioning and subsequent locking of the part to be machined on the machine tool.

The use of such known types of locking device is in any case widespread also in work fields that are entirely different from the one cited above, for example to perform painting and cleaning operations or operations for mutually assembling two or more bodies.

More generally, such known types of device are indispensable whenever it is necessary to stably lock an item to be treated by way of generic and even simple operations that do not necessarily relate to a strictly industrial field.

Known types of device are usually constituted by two vertically elongated spacers, whose height and relative distance can be changed according to the dimensions and shape of the part to be locked.

The spacers have, in an upper region, interconnection means for a pair of approximately horizontal brackets or arms, which are arranged in a mirror-symmetrical manner and are arranged so as to engage the part to be locked at their lower surfaces.

Each bracket is provided centrally with a hole that allows the passage of a vertical traction element that is substantially parallel to the corresponding spacer and rigidly coupled in a lower region to the worktable of the machine tool.

The traction element is provided with a threaded end that protrudes from the bracket, in order to allow the removable interconnection of means suitable to temporarily fix the traction element, such' as, for example, complementarily threaded nuts.

The part to be machined, which is usually approximately square, can therefore be interposed preliminarily between the pair of brackets arranged in a mirror-symmetrical fashion with respect to each other.

The brackets are then adjusted, both in terms of height and as regards their mutual distance, as a function of the dimensions of the part interposed between them.

The part is then locked by way of the pressure contact that occurs between an end portion of the lower surface of the brackets and two opposite ends of the upper surface of such part.

A considerable drawback observed in known kinds of device is indeed the fact that in order to achieve stable locking of the part it is necessary to place both spacers of the locking device adjacent to two opposite lateral faces of the part.

This makes it impossible to perform any treatment at those lateral faces which, being affected by said adjacent arrangement, do not have surfaces that are free so as to allow contact with the tool or more generally with the component of any machine.

This leads to the need to subsequently remove the part, positioning it with a new orientation that allows to expose the two lateral surfaces previously partially hidden by the locking elements

One factor that worsens this problem is that, during locking, the part has at least three surfaces at which no treatment at all can be performed: the third surface, in addition to the lateral ones that are adjacent to the locking elements, being the lower one, which rests fully on the worktable of the machine tool.

This leads to the need to resort to a plurality of successive operations for positioning and locking the part, with the further worsening factor that is it possible to make systematic positioning errors in several instances, such errors having a negative effect on the overall precision.that can be achieved at the end of the treatments performed on the part.

Another problem observed in these known types of device is the need to use a qualified workforce in order to perform the delicate preliminary operations for positioning and centering the part.

Another drawback that often occurs in these known types of locking device is possible damage to the part by local deformation, at the surfaces that have already been treated and subsequently subjected to contact by the brackets, in order to allow to treat any as yet untreated surfaces of the part.

An important problem, in addition to the ones already cited, is the considerable expenditure of time caused by repeated successive operations for release, repositioning and relocking of the part meant to undergo any treatment at a plurality of surfaces.

U.S. Patent No. 5,887,733 discloses a modular-fixturing system for supporting objects comprising a base plate made up of a pair of base plate portions, each base portion includes a plurality of threaded fastener openings in which vertically stacked spacer tubes can be mounted using conventional fasteners. A cap screw threadebly engages the spacer tube with vertical bars to be attached to the sides of spacer tubes. The vertical bars provide mounting points for components which engage an object.

The aim of the present invention is to solve the above-mentioned problems, eliminating the drawbacks of the cited known art, by providing a modular structure, particularly for mounting blanks on retainers, which allows to stably lock and position parts on the worktable of any machine tool so as to achieve the intended treatments.

Within this aim, an object of the invention is to provide a mounting Structure that allows to treat simultaneously the largest possible number of surfaces of the part, acting on at least five mutually perpendicular separate axes.

This solution is meant to achieve a possibly drastic reduction in the number of positioning and locking operations required to perform the preset treatments.

A further object is to provide a mounting structure that is capable of ensuring optimum precision in centering the blank, further allowing repeatability of said centering in the case of treatments resumed at a later time.

A still further object is to provide a mounting structure that allows very safe and easy use even on the part of a workforce that is not particularly qualified.

Another object is to provide a mounting structure that is substantially flexible in use and can be adapted easily even to parts that have significantly different weights, dimensions and shapes.

Another object is to provide a mounting structure that allows to perform rapidly the preliminary operations for locking the part, in order to reduce production costs.

Another object is to provide a mounting structure that associates with the preceding characteristics that of having low manufacturing costs and of being obtainable with conventional and known machines and facilities.

This aim and these and other objects that will become better apparent hereinafter are achieved by a modular structure, particularly for mounting blanks on retainers, as defined in claim 1.

Further characteristics and advantages of the invention will become better apparent from the following detailed description of a particular embodiment thereof, illustrated only by way of non-limitative example in the accompanying drawings, wherein:
Figure 1 is an exploded front view of the modular structure of the 30invention;
Figure 2 is an exploded perspective view of the modular structure of the invention, in which the lower plate and the upper blank have been omitted for the sake of clarity in illustration;
Figure 3 is a lateral sectional view of the modular structure of the invention;
Figure 4 is a lateral sectional view of a step of the procedure for locking the mounting structure;
Figure 5 is an exploded front view of the connection between two separate bodies of the modular structure of the invention;
Figure 6 is a perspective view of a possible form of application of the modular structure of the invention;
Figure 7 is a perspective view of the application of the connection of Figure 5;
Figure 8 is a perspective view of the modular structure of the invention provided with an auxiliary turret;
Figure 9 is a perspective view of the modular structure of the invention provided with a separate auxiliary plate.

With reference to the figures, the reference numeral 1 designates a modular structure that is particularly suitable to mount on retainers a blank, designated by the reference numeral 50 in the figures, or more generally any part to be treated and/or assembled.

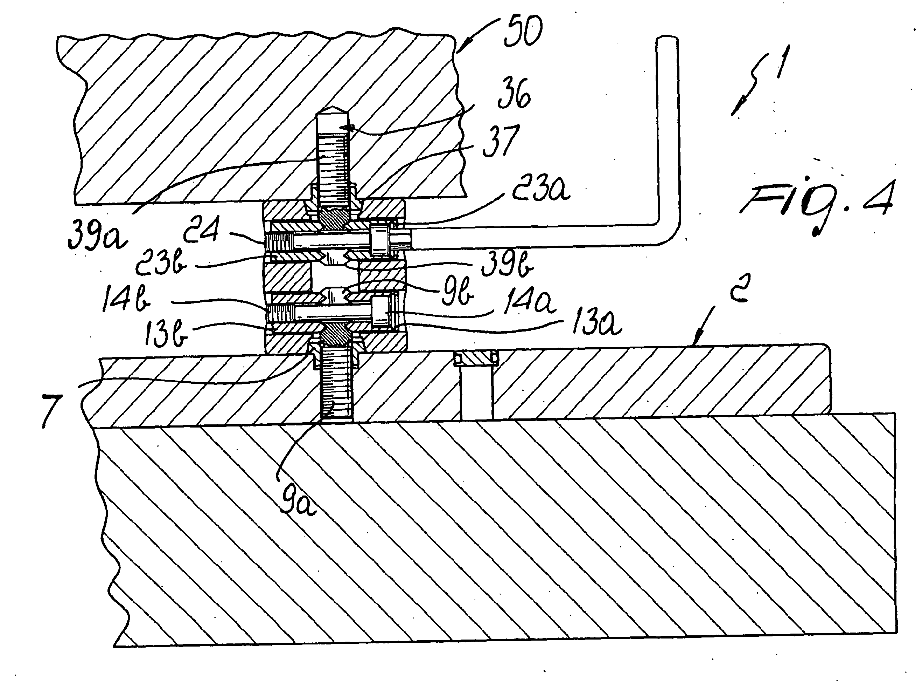

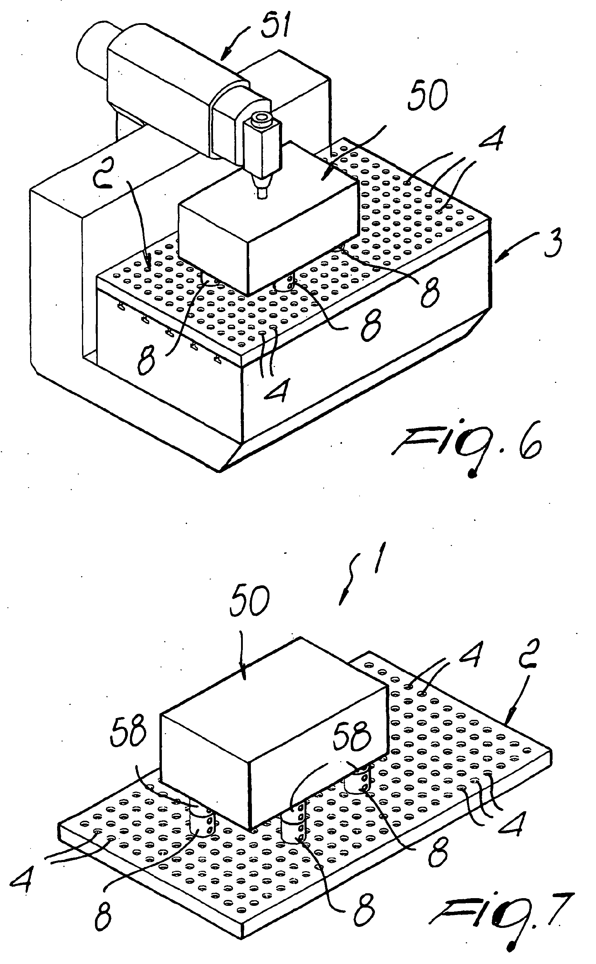

The modular structure 1 comprises at least one plate 2 that is substantially flat and is associated with a worktable 3 (see Figure 6) in a lower region, in the embodiment shown by way of example in Figure 4, by way of a known type of connection means.

The worktable 3 can be, for example, the worktable of a machine tool, such as the one designated by the reference numeral 51 in Figure 6, or the worktable of another machine for treating, assembling or for example painting blanks.

The plate 2, which preferably has a rectangular plan shape, has, at the upper surface, a grid of first seats 4, which are advantageously arranged according to a grid-like modular configuration or according to a rectangular mesh.

Each one of the first seats 4 comprises a first compartment 5, below which a first blind hole 6 is formed coaxially, said hole being threaded internally and having a diameter that is advantageously smaller than the diameter of the compartment 5

The first compartment 5 is suitable to stably accommodate a first portion 7a of a first centering bush, designated by the reference numeral 7 in the figures, which is advantageously shaped like a circular ring.

The bush 7 has a second upper portion 7b, which has an approximately frustum-shaped outer perimetric surface and protrudes above the plate 2 once the connection between the first seat 4 and the bush 7 has been achieved.

Each one of the first seats 4 is suitable to allow the detachable connection of first fixing means for a body designated by the reference numeral 8.

The first fixing means advantageously comprise, in this embodiment, a first traction element 9, which comprises in a lower region a first stem, designated by the reference numeral 9a, which is substantially cylindrical and complementarily threaded with respect to the first hole 6.

The stem can be coupled, through the first bush 7, to the first hole 6 of a preset seat of the first seats 4, so as to connect the traction element 9 to the plate 2.

The first plate 9 further has a first head, designated by the reference numeral 9b, which protrudes above the first stem 9a and is preferably approximately U-shaped.

The first head 9b is conveniently toothed at its lateral faces formed by the joining of the lateral arms and the central cross-member that constitute said U-shape.

The first head 9b in turn can be arranged within a second through hole 10, which is formed approximately axially in the first body 8 and can have, for example, a substantially cylindrical shape.

The second through hole 10 has, at its ends, a second compartment and a third compartment, designated by the reference numerals 10a and 10b respectively, which are advantageously frustum-shaped so as to be shaped approximately complementarily to the second upper portion 7b of the first bush 7.

Insertion of the first traction element 9 in the second hole 10 produces contact between the perimetric surfaces of the second compartment 10a and of the upper second portion 7b of the bush 7, so as to achieve the automatic centering of the first body 8 with respect to the first seat 4.

A third through hole 12 is further provided radially in the first body 8, at a first lower region 11a thereof, and is conveniently obtained so as to affect the second through hole. 10 approximately at right angles.

Advantageously, the longitudinal axis of the third hole 12 intersects approximately at right angles the longitudinal axis of the second hole 10 in which the first traction element 9 is partially accommodated.

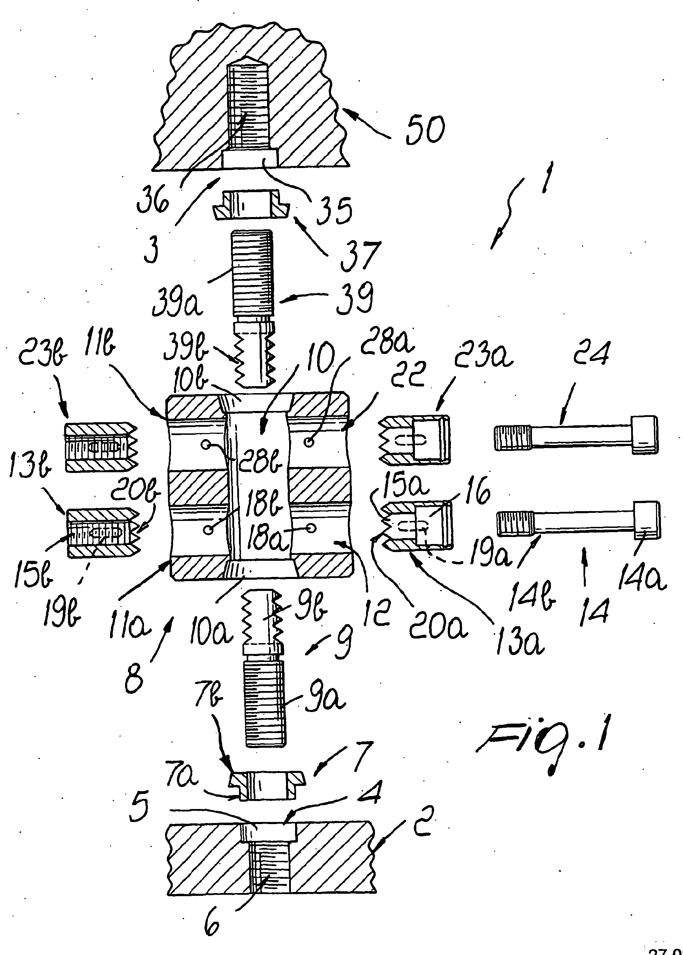

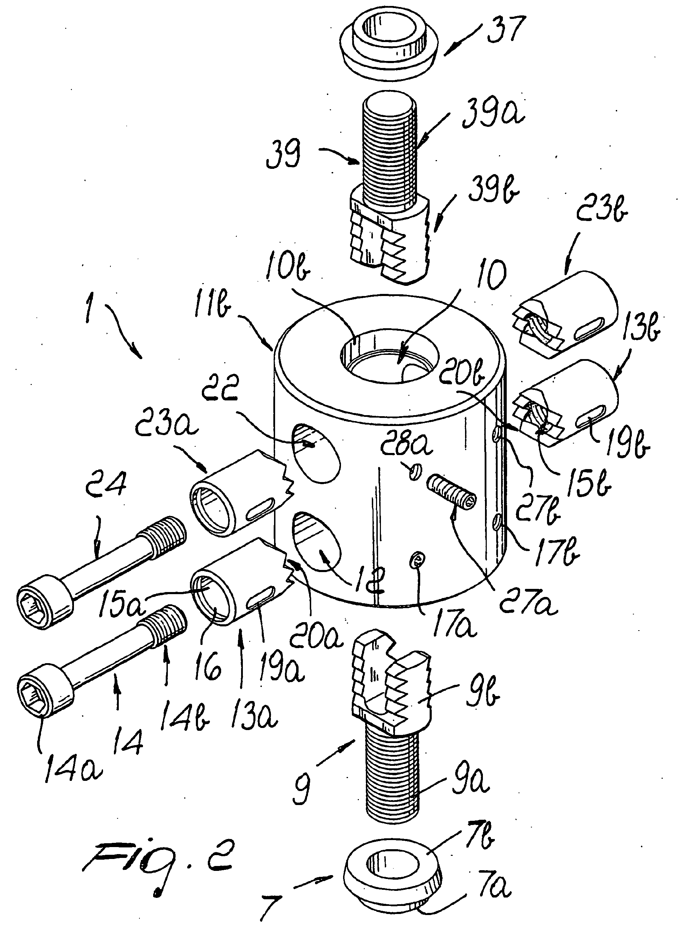

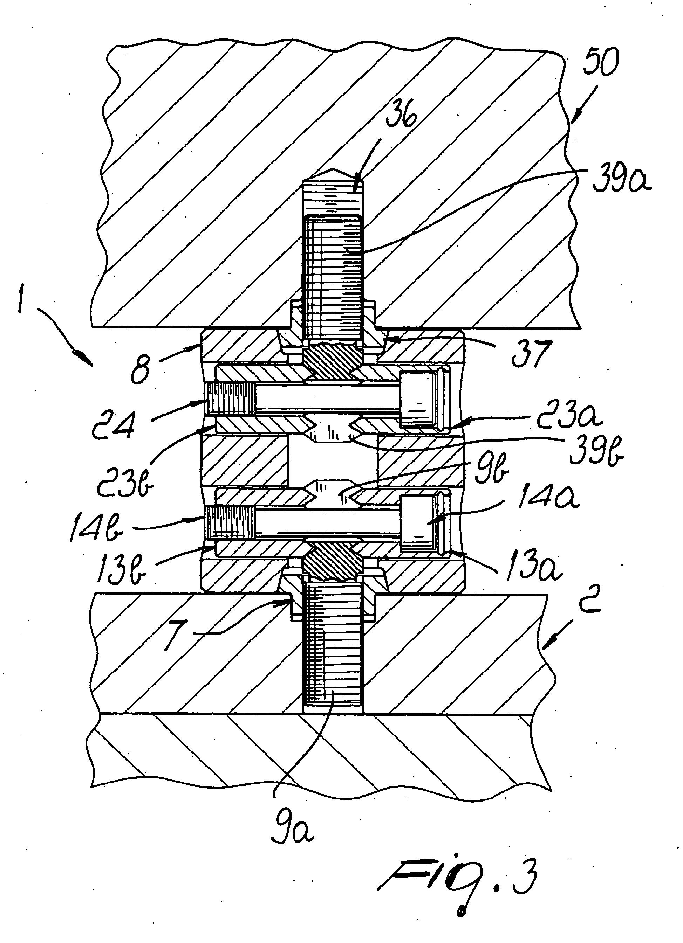

Figures 1 to 5 show that the first traction element 9 can be locked by activating a pair of first jaws, designated by the reference numerals 13a .and 13b, which can be accommodated inside the third hole 12 and are arranged mirror-symmetrically in positions that are diametrically mutually opposite.

The first jaws 13a and 13b are substantially cylindrical and can be mutually associated by way of third activation means, constituted for example by a first screw 14, which is arranged coaxially to a fourth hole and a fifth hole, designated by the reference numerals 15a and 15b, which are through holes formed axially along the first jaws 13a and 13b.

In particular, the first screw 14, which is approximately as long as the third hole 12, comprises a second head 14a, which has a larger diameter than the fourth hole 15a and can be accommodated in a complementarily shaped fourth compartment, designated by the reference numeral 16, that is formed coaxially with respect to the fourth hole 15a and is directed outward.

A second stem, designated by the reference numeral 14b, protrudes axially from the second head 14a of the first screw 14 and is threaded at least partially at its free end, so as to produce a detachable connection to the fifth hole 15a, which is internally threaded complementarily.

The first body 8 comprises rotation-preventing elements for said pair of first jaws 13a and 13b, which are advantageously constituted, for example, by two first threaded pins 17a and 17b, which can be screwed into complementarily threaded sixth holes 18a and 18b formed in the first body 8 along two mutually parallel axes that are perpendicular to the second hole 10 and to the third hole 12.

The sixth holes 18a and 18b affect the third radial hole 12 at the first jaws 13a and 13b, so that the free ends, not shown, of the first pins 17a and 17b interact with slots or first longitudinal recesses, designated by the reference numerals 19a and 19b, formed along the outer surface of the first jaws 13a and 13b.

The interaction of the free ends of the pins 17a and 17b in the recesses 19a and 19b therefore prevents a rotary motion of the first jaws 13a and 13b, allowing them only to perform a translational motion, in opposite directions, along the third hole 12.

The first body 8 can be positioned coaxially to the traction element 9 along a preset orientation, which allows to accommodate the second stem 14b of the first screw 14, associated beforehand with the first jaws 13a and 13b, transversely between the lateral arms of the first U-shaped head 9b of the first traction element 9.

A rotation of the first screw 14 on the part of the operator allows the coordinated movement of the pair of first jaws 13a and 13b toward the toothed lateral faces of the first head 9b of the traction element 9: in the illustrated embodiment, the first jaws have first ends 20a and 20b which face each other or face the first head 9b and are conveniently toothed complementarily so as to lock temporarily the traction element 9 within the second axial hole 10.

Figure 1 schematically shows that the first body 8 is substantially symmetrical with respect to the central transverse plane, so that in turn it can be associated with the blank 50 by way of second fixing means, which are advantageously but not necessarily entirely similar to the first fixing means described above.

A seventh hole 22 is in fact provided radially at a second upper region 11b of the first body 8 and is preferably similar to the third hole 12 and advantageously parallel thereto.

Two second jaws 23a and 23b are accommodated within the seventh hole 22, are mirror-symmetrical and are associated, so that they can slide along opposite directions, by way of fourth activation means, which are preferably constituted by a second screw 24 that is suitable to interact in exactly the same manner as the first screw 14. Likewise, the first body 8 comprises separate rotation-preventing elements for the pair of second jaws 23a and 23b, which allow them only to perform a translational motion along the seventh hole 22: these separate rotation-preventing elements comprise a pair of second pins 27a and 27b, which are also threaded and can be screwed into complementarily shaped eighth holes 28a and 28b formed in an upper region and parallel to the pair of sixth holes 18a and 18b.

The free ends, not shown, of the second pins 27a and 27b therefore interact with respective second longitudinal recesses, designated by the reference numerals 29a and 29b, which are formed along the outer surface of the second jaws 23a and 23b.

In this manner, after providing in a preset point of the blank a second seat 34 that is advantageously fully similar to the first seat 4 and is therefore constituted by a fifth compartment 35 connected to a ninth blind hole 36 that is internally threaded, it is possible to screw into said second seat a third stem 39a of a second traction element, designated by the reference numeral 39, which is prearranged coaxially to a second bush 37 that is advantageously similar to the first bush 7.

The locking of the blank 50 with respect to the plate 2 occurs by way of the positioning of a third head, designated by the reference numeral 39b and advantageously U-shaped, of the second traction element 39 within the second axial hole 10, and by way of the subsequent temporary connection of the traction element by means of the pair of second jaws 23a and 23b.

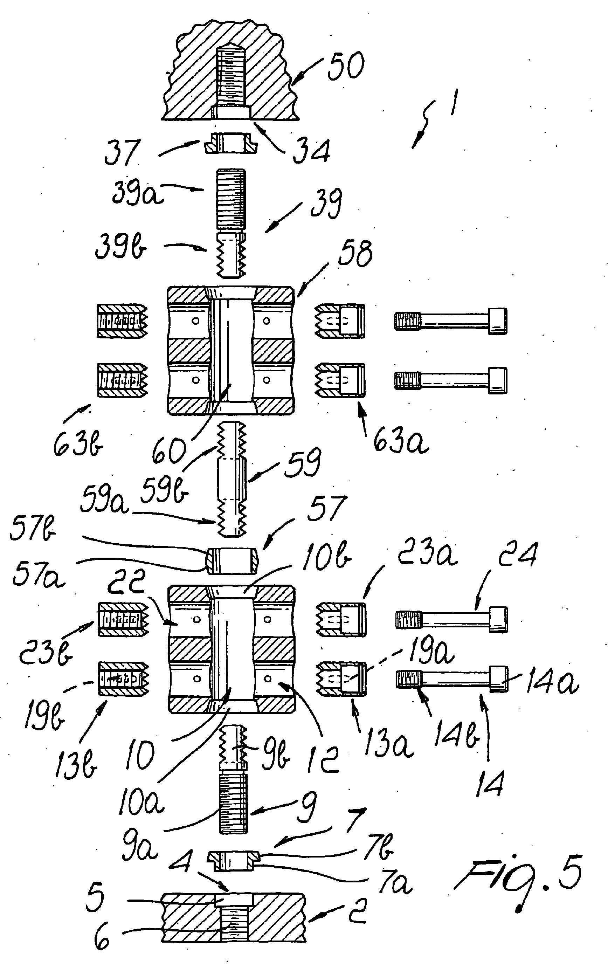

Figures 5 and 7 show that the requirement to work not only at the lateral and/or upper faces of the blank but also at the edge or at the lower surface can be met by means of the modular use of a plurality of components such as the first body 8 described above.

Accordingly, for example it is possible to associate, in an upper region with respect to the first body 8, a second body, designated by the reference numeral 58, which is advantageously similar to the body 8 in terms of shape and dimensions.

Once the first body 8 has been associated with the plate 2, it is in fact possible to position, at the third compartment 10b, a third bush, designated by the reference numeral 57 in Figure 5, which is substantially annular.

The third bush 57 advantageously comprises a third lower portion 57a, which is shaped approximately complementarily to the third compartment 10b and therefore has a perimetric surface that is approximately frustum-shaped.

A fourth portion, designated by the reference numeral 57b, is rigidly coupled to the third portion 57a in an upper region and has a frustum-shaped perimetric surface that is preferably mirror-symmetrical with respect to the surface of the third portion 57a.

A third traction element 59 can be arranged coaxially to the third bush 57 and is advantageously provided, at its ends, with a fourth head and a fifth head, designated by the reference numerals 59a and 59b.

The fourth head 59a of the third traction element 59 is conveniently shaped like the third head 39b of the second traction element 39, so that it can be locked temporarily between the second pair of jaws 23a and 23b.

The second body 58 is advantageously cylindrical and can be arranged above the first body 8 so that it is interposed between said first body and the blank 50.

In this manner, the fourth head 59b of the third traction element 59 is accommodated within a tenth hole 60 formed axially in the second body 58. The detachable connection of the third traction element 59 to the second body 58 is allowed by way of the locking of the fifth head 59b between two third jaws 63a and 63b, whose shape and dimensions are preferably similar to those of the pair of first jaws 13a and 13b.

The second body 58 can be fixed at the second seat 34 of the blank 50 by using the second traction element 39 and the second bush 37, according to the method described above.

The interposition of the second body 58 between the first body 8 and the blank 50 allows to double the distance between the plate 2 and the blank 50, so as to allow to work easily on the lower surface thereof.

In the same manner, it is possible to associate mutually in series three or more bodies similar to the first and second bodies 8 and 58, increasing proportionally the distance between the plate 2 and the blank 50.

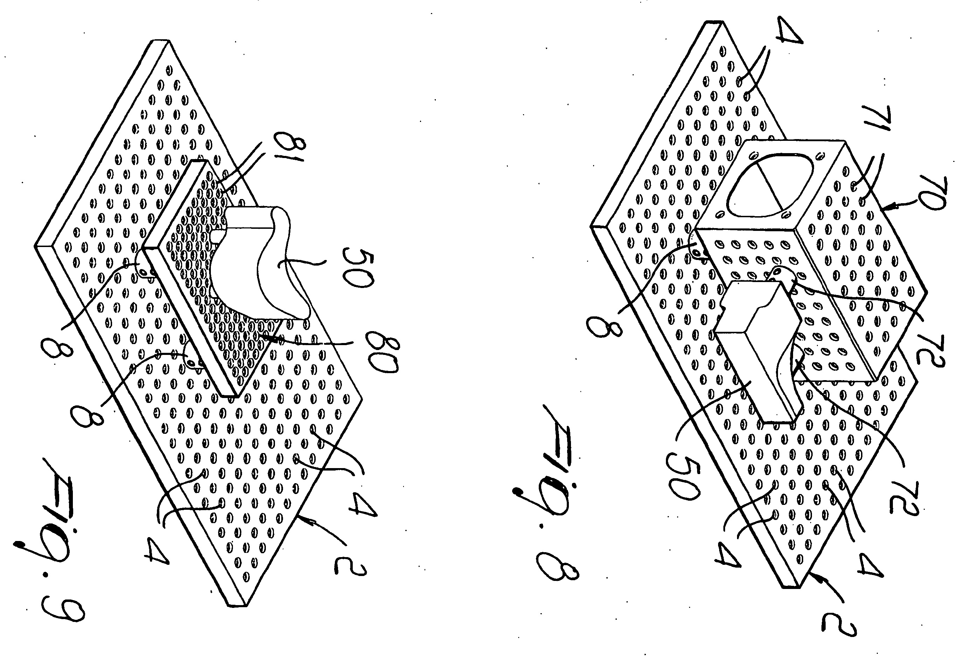

In Figure 8, the reference numeral 70 designates a turret, which is advantageously but not necessarily shaped like a parallelepiped and whose lateral and upper walls preferably have third seats, designated by the reference numeral 71, which are substantially identical, in terms of shape and distribution, to the first seats 4 of the plate 2.

In the illustrated embodiment, the turret 70 is associable with the plate 2 by interposing two or more first bodies 8: in turn, the blank 50 can be associated laterally or in an upper region with respect to the turret 70 by using separate bodies 72, which are advantageously similar to the first body 8.

In particular, the turret 70 has, in a lower region, for example, four additional holes, not shown, which are similar to the tenth hole 60 of the second body 58.

Two separate jaws are arranged transversely to each one of the additional holes and are suitable to engage selectively a separate traction element, not shown, which is similar to the third traction element 59.

The separate traction element, arranged coaxially to a separate bush that is similar to the third bush 57, allows the detachable mutual connection of the first body 8 and the turret 70.

It is thus possible to perform treatments at the entire lower surface of the blank, since said blank is locked at one of its lateral surfaces.

If the blank 50 has particularly small dimensions, it is possible to associate, in an upper region with respect to the plate 2, a separate plate, designated by the reference numeral 80 in Figure 9, which has a plurality of fourth seats 81, which are similar to the first seats 4 and are arranged with respect to each other along a grid whose spacing is reduced, for example halved, with respect to the grid of the plate 2.

The connection of the separate plate 80 to each one of the first bodies 8 for fixing to the plate 2 is preferably provided in a manner fully similar to the one described for the turret 70.

The use of the invention is therefore as follows: with reference to Figures 1 to 4, the user can position the first portion 7a of the first bush 7 at the first compartment 5 of one of the first seats 4 of the plate 2, subsequently screwing the first stem 9a of the first traction element 9 into the first blind hole 6 of the first seat 4.

The first head 9b of the traction element 9 can then be inserted in the second through hole 10, formed axially with respect to the first body 8, so that the first screw 14 is arranged between the arms of the first head 9b, which is conveniently U-shaped.

The first body is centered with respect to the first seat automatically by means of the resting of the perimetric surfaces of the second compartment 10a against the perimetric surfaces of the second portion 7b of the bush 7.

The operator can thus activate the first fixing means by screwing in the first screw 14, so as to simultaneously couple the pair of first jaws 13a and 13b at the opposite faces of the first U-shaped head of the first traction element 9.

In order to connect the blank 50 to the first body 8, it is therefore necessary to provide beforehand one or more second seats 34 on the blank 50; such seats can be formed advantageously in regions of the blank that do not compromise its structural integrity.

At the same time, the second seats 34 should be formed preferably so as to facilitate the treatments and/or operations to be performed during the mounting of the blank on a retainer.

The detachable connection of the blank to the plate is provided by means of the positioning in the chosen second seat of the second bush and of the second traction element, and then by means of the positioning and subsequent locking of the second traction element within the first body.

Once the entire mounting structure has been assembled, the blank rests against the first body 8, which in turn is in contact with the plate 2.

Clearly, depending on the treatments to be performed and on the particular configuration of the blank, the blank can be provided advantageously with a plurality of second seats 34, in order to allow its stable resting at respective first bodies arranged in parallel to each other and connected in a lower region to corresponding first seats 4 that belong to the grid of the plate.

It has thus been found that the invention has achieved the intended aim and objects, a modular structure for mounting blanks on retainers having been provided which allows to position and lock the blanks stably for performing a preset treatment and/or operation, ensuring at the same time their optimum centering even on the part of non-expert operators.

Moreover, it has been found that such locking is performed by occupying a single surface of the blank, mostly partially and at small localized portions, therefore allowing simultaneous treatment and/or machining on all the other surfaces.

This allows to avoid, or at least reduce drastically, undesirable successive variations in the positioning and corresponding locking of the blank, such as for example in the case of a plurality of treatment passes performed on the same blank, thus avoiding the onset of sources of errors and of great expenditures of time.

The invention is of course susceptible of numerous modifications and variations, as defined in the appended claims.

Thus, for example, the first and second bodies can have shapes that differ from the cylindrical one, and therefore for example can be prism-shaped or frustum-shaped or shaped like a truncated pyramid, provided that they have at least two resting surfaces for said blank and said plate.

Likewise, the first and second fixing means and the third and fourth activation means can be provided in a different manner.

The materials used, as well as the dimensions that constitute the individual components of the invention, may of course be more pertinent according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A modular structure (1), for mounting, on retainers, blanks (50) having at least one seat (34), said modular structure (1) comprising at least one flat plate (2) that has a plurality of first seats (4) for detachable connection of first fixing means for at least one first body (8) and second temporary fixing means allowing detachable connection of said first body (8) to said blank (50) **characterized in that** said second temporary fixing means allow connection of said modular structure (1) at said seat (34) formed in said blank (50) and **in that** it further comprises a first centering bush (7) for the automatic centering of said first body (8) with respect to said first seat (4), said first bush (7) having a first portion (7a) which is connectable in said first seat (4) and a second frustum-shaped upper-portion (7b) which has an approximately frustum-shaped outer perimetric surface that protrudes above the plate (2) once the connection between the first seat (4) and the bush (7) has been achieved, said second frustum-shaped upper-portion (7b) having a lower surface directly in contact with an upper surface of said flat plate (2), said first means for fixing said first body (8) to said plate (2) comprise a first traction element (9) for connection between said first seat (4) and said first body (8) and a first vise-like device, which is associated with said first body (8), so as to temporarily lock said first traction element (9), said first body (8), which is cylindrical, has a second axial hole (10) for the partial containment of said first (9) and/or second (39) traction elements, and comprises, in the lower region, a third through hole (12) that is formed radially and is meant to accommodate said first vise-like device, said third hole (12) affecting said second axial hole (10) approximately at right angles, said first vise-like device is constituted by a pair of first jaws (13a, 13b), which can be accommodated inside said third hole (12) and are arranged mirror-symmetrically in mutually diametrically opposite positions, and said first jaws (13a, 13b), which are substantially cylindrical, are mutually associable by way of activation means, which are constituted by a first screw (14), which is arranged coaxially to a fourth hole (15a) and a fifth hole (15b) which are through holes and are formed axially along said pair of first jaws (13a, 13b).

2. The structure (1) according to claim 1, **characterized in that** said second temporary fixing means allow detachable connection of said first body (8) at a seat (71,81) formed respectively in a turret (70) or in a separate plate (80).

3. The structure (1) according to claim 1, **characterized in that** said second temporary fixing means allow detachable connection of said first body (8) at a separate seat (60) formed in a second body (58).

4. The structure (1) according to one or more of the preceding claims, **characterized in that** said first body (8) has at least two surfaces that are flat and are suitable for resting said plate (2) and/or said blank (50) thereon.

5. The structure (1) according to claim 4, **characterized in that** said second means for fixing said first body (8) to said blank (50) comprise a second traction element (39) for connection between said second seat (34) and said first body (8).

6. The structure (1) according to claims 1 and 4, **characterized in that** said second means for fixing said first body (8) at said second seat (34) comprise a second vise-like device that is associated with said first body (8), so as to temporarily lock said second traction element (39).

7. The structure (1) according to one or more of the preceding claims, **characterized in that** said plate (2) has at least at the upper surface a grid constituted by said first seats (4), which are arranged according to a grid-like modular configuration, or according to a rectangular mesh.

8. The structure (1) according to one or more of the preceding claims, **characterized in that** each one of said first seats (4) comprises a first hole (6), which is threaded internally for the detachable connection of a first complementarily threaded stem (9a) of said first traction element (9).

9. The structure (1) according to claims 4 and 8, **characterized in that** each one of said first seats (4) comprises a first compartment (5), which is connected in a lower region to said first hole (6) and has a larger diameter than said first hole (6).

10. The structure (1) according to claims 4 and 9, **characterized in that** said first compartment (5) is suitable to stably accommodate said first lower portion (7a) of said first centering bush (7), which is shaped like a circular ring.

11. The structure (1) according to claims 1 and 4, **characterized in that** said second axial through hole (10) has, at its ends, a second compartment (10a) and a third compartment (10b), which are frustum-shaped and are designed to partially contain respectively said first bush (7) and a separate second bush (37) that is associable in said second seat (34).

12. The structure (1) according to claims 4 and 11, **characterized in that** said second portion (7b) is shaped approximately complementarily to said second compartment (10a) of said second axial hole (10).

13. The structure (1) according to one or more of the preceding claims, **characterized in that** the insertion of said first traction element (9) in said second hole (10) produces contact between the perimetric surfaces of said second compartment (10a) and the perimetric surfaces of said second portion (7b) of said bush (7), so as to automatically center said first body (8) with respect to said first seat (4).

14. The structure (1) according to one or more of the preceding claims, **characterized in that** said first traction element (9) comprises a first head (9b), which protrudes axially and in an upper region with respect to said first stem (9a) and is approximately U-shaped.

15. The structure (1) according to claim 4 and 14, **characterized in that** said first head (9b) of said first traction element (9) is toothed at its lateral faces, formed by the joining of the lateral arms and the central cross-member that form said U-shape.

16. The structure (1) according to one or more of the preceding claims, **characterized in that** in the lower region of said first body (8) there is a third through hole (12) that is formed radially and is meant to accommodate said first vise-like device, said third hole (12) affecting said second axial hole (10) approximately at right angles.

17. The structure (1) according to claims 1 and 4, **characterized in that** said first screw (14), which is approximately as long as said third hole (12), comprises a second head, which has a larger diameter than said fourth hole (15a) and can be accommodated in a complementarily shaped fourth compartment (16), which is formed coaxially with respect to said fourth hole (15a) and is directed outward.

18. The structure (1) according to claims 4 and 17, **characterized in that** said first screw (14) comprises a second stem (14b), which protrudes axially from said second head and is at least partially threaded at its free end, so as to achieve a detachable connection to said fifth hole (15b), which is internally threaded complementarily.

19. The structure (1) according to one or more of the preceding claims, **characterized in that** said first body (8) comprises first rotation-preventing elements for said pair of first jaws (13a, 13b), so as to allow said jaws to perform only a translational motion, in opposite directions, along said third radial hole.

20. The structure (1) according to claims 4 and 19, **characterized in that** said first rotation-preventing elements are constituted by a pair of first threaded pins (17a, 17b), which can be screwed into complementarily threaded sixth holes (18a, 18b) formed in said first body (8) along two axes that are parallel to each other and are approximately perpendicular to said second hole (10) and to said third hole (12).

21. The structure (1) according to claims 4 and 20, **characterized in that** said sixth holes (18a, 18b) affect said third radial hole at said first jaws (13a, 13b), the free ends of said first pins (17a, 17b) interacting selectively with slots or first longitudinal recesses (19a, 19b) formed along the outer surface of said first jaws (13a, 13b).

22. The structure (1) according to one or more of the preceding claims, **characterized in that** said second stem (14b) of said first screw (14) is suitable to be accommodated, when said first body (8) is associated coaxially with said first traction element(9), transversely to the arms of said first U-shaped head of said first traction element (9).

23. The structure (1) according to one or more of the preceding claims, **characterized in that** said first jaws (13a, 13b) have first mutually facing ends, which are toothed complementarily with respect to the lateral faces of said first head (9b) of said first traction element (9).

24. The structure (1) according to claims 4 and 23, **characterized in that** a rotation of said first screw (14) on the part of the operator allows the coordinated movement of said pair of first jaws (13a, 13b) toward the toothed lateral faces of said first head (9b) of said traction element, so as to allow the temporary locking of said traction element within said second axial hole (10).

25. The structure (1) according to one or more of the preceding claims, **characterized in that** said first body (8) is substantially symmetrical with respect to the central transverse plane, so as to allow its connection to said blank (50) by way of said second fixing means, which are similar to said first fixing means.

26. The structure (1) according to one or more of the preceding claims, **characterized in that** said first body (8) is substantially symmetrical with respect to the central transverse plane, so as to allow its connection to said second body (58) or to said separate plate (80) or turret (70), by way of said separate fixing means, which comprise said third traction element (59).

27. The structure (1) according to one or more of the preceding claims, **characterized in that** a seventh through hole is formed radially in the upper region of said first body (8) in order to accommodate said second clamp device, affects approximately at right angles said second axial hole (10), and is similar to said third hole (12) and parallel thereto.

28. The structure (1) according to claims 4 and 27, **characterized in that** said second clamp device is constituted by a pair of second jaws (23a, 23b), which can be accommodated inside said seventh hole (22), are mirror-symmetrical and are mutually associated so that they can slide in opposite directions by way of fourth activation means, which are constituted by a second screw (24) that interacts in the same manner as said first screw (14).

29. The structure (1) according to one or more of the preceding claims, **characterized in that** said first body (8) comprises second rotation-preventing elements for said pair of second jaws (23a, 23b), which allow said jaws (23a, 23b) to perform only a translational motion along said seventh hole (22).

30. The structure (1) according to claims 4 and 29, **characterized in that** said second rotation-preventing elements are preferably similar to said first rotation-preventing elements and comprise a pair of second threaded pins (27a, 27b) that can be screwed into complementarily threaded eighth holes (28a, 28b) formed in an upper region and approximately parallel with respect to said pair of sixth holes (18a, 18b), so as to interact selectively in said longitudinal recesses (29a, 29b) formed along the outer surface of said second jaws (23a, 23b).

31. The structure (1) according to one or more of the preceding claims, **characterized in that** each one of said second seats (34,60,81), formed in said blank (50), or in said second body (58) or in said separate plate (80), comprises a ninth hole (36) which is threaded internally for the removable connection of a third complementarily threaded stem (39a) of said second traction element (39).

32. The structure (1) according to claims 4 and 31, **characterized in that** each one of said second seats (34) comprises a fifth compartment (35), which is connected in a lower region to said ninth hole (36) and has a larger diameter than said ninth hole (36).

33. The structure (1) according to claims 4 and 32, **characterized in that** said fifth compartment (35) is suitable to stably accommodate a second centering bush (37) that has the same shape as said first bush (7).

34. The structure (1) according to one or more of the preceding claims, **characterized in that** said second traction element (39), which is associable in said second seat (34), has a third head (39b) whose shape is similar to the shape of said first head (9b) in order to allow a detachable connection between said pair of second jaws (23a, 23b).

35. The structure (1) according to one or more of the preceding claims, **characterized in that** the locking of said first body (8) at said second seat (34) entails placing said third head (39b), which is U-shaped, within said second axial hole (10), and subsequently activating said second screw (24) so as to close said pair of second jaws (23a, 23b).

36. The structure (1) according to one or more of the preceding claims, **characterized in that** it provides for the modular use of two or more bodies similar to said first body (8), so as to provide a series arrangement that is suitable to increase the distance between said plate (2) and the element connected thereto, such as said blank (50) or said turret (70) or said separate plate (80).

37. The structure (1) according to claims 4 and 36, **characterized in that** a second body (58), similar to said first body (8), is associable above said first body (8) by way of said separate fixing means.

38. The structure (1) according to claims 4 and 37, **characterized in that** said separate fixing means comprise a third centering bush (57), which is substantially annular and can be accommodated at least partially in said third compartment (10b) of said first body (8).

39. The structure (1) according to claims 4 and 38, **characterized in that** said third bush (57), which is shaped complementarily to said third compartment (10b) in a lower region, is symmetrical with respect to its central transverse plane.

40. The structure (1) according to one or more of the preceding claims, **characterized in that** the ends of said third traction element (59) are constituted by a fourth lower head (59a) and by a fifth upper head (59b), which are suitable for connection respectively to said first body (8) and to said element, such as said blank (50) or said turret (70) or said separate plate (80).

41. The structure (1) according to claims 4 and 40, **characterized in that** said third traction element (59), arranged coaxially to said third bush (57), is mirror-symmetrical with respect to its central transverse plane.

42. The structure (1) according to claims 4 and 40, **characterized in that** said fourth and fifth heads (59a, 59b) of said third traction element (59) have shapes that are similar to those of, respectively, said third head (39b) of said second traction element (39) and said first head (9b) of said first traction element (9), so as to allow a detachable connection respectively between said pair of first jaws (13a, 13b) and between a third pair of jaws (63a, 63b), which are similar to said pair of first jaws (13a, 13b), of said first body (8).

43. The structure (1) according to claims 4 and 40, **characterized in that** said fourth and fifth heads (59a, 59b) of said third traction element (59) have shapes that are similar, respectively, to the shape of said third head (39b) of said second traction element (39) and said first head (9b) of said first traction element(9), so as to allow a detachable connection respectively between said pair of first jaws (13a, 13b) and between a separate pair of jaws of said turret (70) or separate plate (80).

44. The structure (1) according to one or more of the preceding claims, **characterized in that** said second body (58) can be fixed at said second seat (34) of said blank (50) by way of the engagement of said second traction element (39), arranged coaxially to said second bush (37), between said second seat (34) and said second body (58).

45. The structure (1) according to claim 2, **characterized in that** it comprises said turret (70), in the lateral and/or upper walls of which said seats are formed, said seats having approximately the same shape and dimensions as said first seats (4) of said plate (2).

46. The structure (1) according to claims 4 and 45, **characterized in that** said turret (70), which is shaped like a parallelepiped, comprises in a lower region one or more pairs of separate jaws, which are similar to said pair of first jaws (13a, 13b), for the connection of two or more first lower bodies.

47. The structure (1) according to claims 4 and 45, **characterized in that** said blank (50) can be associated, laterally or in an upper region, with said turret (70) by using separate bodies that are similar to said first and/or second bodies (8, 58).

48. The structure (1) according to claim 2, **characterized in that** it comprises said separate plate (80), which is provided at least in an upper region with a plurality of said seats (81), whose shape and dimensions are approximately equal to those of said first seats (4) of said plate (2).

49. The structure (1) according to claims 4 and 48, **characterized in that** said seats (71,81) are arranged according to a grid-like modular configuration or according to a rectangular mesh, which has a smaller spacing than the spacing between said first seats (4).

50. The structure (1) according to claims 4 and 48, **characterized in that** said separate plate (80), which is rectangular, comprises in a lower region one or more pairs of separate jaws, which are similar to said pair of first jaws (13a, 13b), for the connection of two or more first lower bodies.

51. The structure (1) according to claims 4 and 48, **characterized in that** said blank (50) can be associated in an upper region with said turret (70) by using separate bodies that are similar to said first and/or second bodies (8, 58).

## Patentansprüche

1. Eine modulare Struktur (1) zur Befestigung von Werkstücken (50) an Halterungen, wobei die modulare Struktur (1) mindestens eine Platte (2) umfasst, die eine Mehrzahl von ersten Sitzen (4) zur lösbaren Verbindung von ersten Befestigungsmitteln für mindestens einen Körper (8) aufweist und zweite temporäre Befestigungsmittel, die eine lösbare Verbindung des ersten Körpers (8) an dem Werkstück (50) ermöglicht, **dadurch gekennzeichnet, dass** die zweiten Befestigungsmittel eine Verbindung der modularen Struktur (1) an dem in dem Werkstück (50) ausgebildeten Sitz (34) ermöglichen, und dass es weiter eine erste Zentrierbuchse (7) für die automatische Zentrierung des ersten Körpers (8) in Bezug auf den ersten Sitz (4) umfasst, wobei die erste Buchse (7) einen ersten Teil (7a), der in dem ersten Sitz (4) verbindbar ist und einen zweiten kegelstumpfförmigen Oberteil (7b), der eine annähernd kegelstumpfförmige Außenumlauffläche aufweist, die über die Platte (2) herausragt, sobald die Verbindung zwischen dem ersten Sitz (4) und der Buchse (7) hergestellt ist, wobei der zweite kegelstumpfförmige Oberteil (7b) eine untere Oberfläche aufweist, die in direktem Kontakt mit der oberen Oberfläche der flachen Platte (2) steht, die ersten Mittel zum Befestigen des ersten Körpers (8) an der Platte (2) umfassen ein erstes Traktionselement (9) zur Verbindung des ersten Sitzes (4) mit dem ersten Körper (8) und eine erste schraubstockartige Vorrichtung, die mit dem ersten Körper (8) assoziiert ist, um das erste Traktionselement (9) temporär zu verriegeln, der erste Körper (8), der zylinderförmig ist, weist eine zweite axiale Bohrung (10) für die teilweise Aufnahme des ersten (9) und/oder zweiten (39) Traktionselements auf, und umfasst in dem unteren Bereich eine dritte Durchgangsbohrung (12), die radial ausgebildet ist und zur Aufnahme der ersten schraubstockartigen Vorrichtung bestimmt ist, wobei die dritte Bohrung (12) die zweite axiale Bohrung (10) ungefähr im rechten Winkel angreift, die erste schraubstockartige Vorrichtung ist von einem Paar von ersten Klauen (13a, 13b) gebildet, die innerhalb der dritten Bohrung (12) untergebracht werden können und spiegelsymmetrisch in gegenseitig diametrisch entgegengesetzten Positionen angeordnet sind, und die ersten Klauen (13a, 13b), die im Wesentlichen zylinderförmig sind, sind gegenseitig mittels Betätigungsmitteln assoziierbar, die von einer ersten Schraube (14), die koaxial zu einer vierten Bohrung (15a) und einer fünften Bohrung (15b), die Durchgangsbohrungen sind und axial entlang des ersten Klauenpaars (13a, 13b) ausgebildet sind, angeordnet ist.

2. Die Struktur (1) gemäß Anspruch 1, **dadurch gekennzeichnet, dass** die zweiten temporären Befestigungsmittel eine lösbare Verbindung des ersten Körpers (8) an einem Sitz (71, 81), der in einer Kuppel (70) bzw. in einer separaten Platte (80) ausgebildet ist, ermöglicht.

3. Die Struktur (1) gemäß Anspruch 1, **dadurch gekennzeichnet, dass** die zweiten temporären Befestigungsmittel eine lösbare Verbindung des ersten Körpers (8) an einem separaten Sitz (60), der in einem zweiten Körper (58) ausgebildet ist, ermöglicht.

4. Die Struktur (1) gemäß einem oder mehreren der vorhergehenden Ansprüche, **dadurch gekennzeichnet, dass** der erste Körper (8) mindestens zwei Oberflächen aufweist, die flach sind und geeignet sind, darauf die Platte (2) und/oder das Werkstück (50) aufzulegen.

5. Die Struktur (1) gemäß Anspruch 4, **dadurch gekennzeichnet, dass** die zweiten Mittel zur Befestigung des ersten Körpers (8) an dem Werkstück (50) ein zweites Traktionselement (39) zur Verbindung des zweiten Sitzes (34) mit dem ersten Körper (8), umfasst.

6. Die Struktur (1) gemäß Anspruch 1 und 4, **dadurch gekennzeichnet, dass** die die zweiten Mittel zur Befestigung des ersten Körpers (8) an dem zweiten Sitz (34) eine zweite schraubstockartige Vorrichtung umfasst, die mit dem ersten Körper (8) assoziiert ist, um temporär das zweite Traktionselement (39) zu verriegeln.

7. Die Struktur (1) gemäß einem oder mehreren der vorhergehenden Ansprüche, **dadurch gekennzeichnet, dass** die Platte (2) zumindest an der oberen Oberfläche eine Gitter aufweist, das von den ersten Sitzen (4) gebildet ist, die gemäß einer gitterähnlichen modularen Konfiguration oder gemäß einem rechteckigen Netz angeordnet sind.

8. Die Struktur (1) gemäß einem oder mehreren der vorhergehenden Ansprüche, **dadurch gekennzeichnet, dass** jeder der ersten Sitze (4) eine erste Bohrung (6) umfasst, die zur lösbaren Verbindung mit einem komplementären Gewinde bereitgestellten ersten Schaft (9a) des ersten Traktionselement (9) innen ein Gewinde aufweist.

9. Die Struktur (1) gemäß den Ansprüchen 4 und 8, **dadurch gekennzeichnet, dass** jeder der ersten Sitze (4) ein erstes Fach (5) aufweist, das in einem unteren Bereich mit der ersten Bohrung (6) verbunden ist und einen größeren Durchmesser als die erste Bohrung (6) aufweist.

10. Die Struktur (1) gemäß den Ansprüchen 4 und 9, **dadurch gekennzeichnet, dass** das erste Fach (5) geeignet ist, den ersten unteren Teil (7a) der ersten Zentrierbuchse (7), die wie ein Kreisring geformt ist, stabil unterzubringen.

11. Die Struktur (1) gemäß den Ansprüchen 1 und 4, **dadurch gekennzeichnet, dass** die zweite axiale Durchgangsbohrung (10) an ihren Enden ein zweites Fach (10a) und ein drittes Fach (10b) aufweist, die kegelstumpfförmig sind und so ausgebildet sind, um teilweise die erste Buchse (7) bzw. eine separate zweite Buchse (37), die in dem zweiten Sitz assoziierbar ist, zu enthalten.

12. Die Struktur (1) gemäß den Ansprüchen 4 und 11, **dadurch** gekennzeiclmet, dass der zweite Teil (7b) etwa komplementär zu dem zweiten Fach (10a) der zweiten axialen Bohrung (10) geformt ist.

13. Die Struktur (1) gemäß einem oder mehreren der vorhergehenden Ansprüche, **dadurch gekennzeichnet, dass** das Einsetzen des ersten Traktionselement (9) in die zweite Bohrung (10) einen Kontakt zwischen den umlaufenden Oberflächen des zweiten Fachs (10a) und den umlaufenden Oberflächen des zweiten Teils (7b) der Buchse (7) herstellt, um den ersten Körper (8) in Bezug auf den ersten Sitz (4) automatisch zu zentrieren.

14. Die Struktur (1) gemäß einem oder mehreren der vorhergehenden Ansprüche, **dadurch gekennzeichnet, dass** das erste Traktionselement (9) einen ersten Kopf (9b) umfasst, der axial, und in einem in Bezug auf den ersten Schaft (9a) oberen Bereich, hervorsteht und etwa eine U-Form aufweist.

15. Die Struktur (1) gemäß den Ansprüchen 4 und 14, **dadurch gekennzeichnet, dass** der erste Kopf (9b) des ersten Traktionselement (9) an seinen seitlichen Fläche, die durch die Verbindung der seitlichen Arme und dem zentralen Querträger, die die U-Form bilden, gezahnt ist.

16. Die Struktur (1) gemäß einem oder mehreren der vorhergehenden Ansprüche, **dadurch gekennzeichnet, dass** es in dem unteren Bereich des ersten Körpers (8) eine dritte Bohrung (12) gibt, die radial ausgebildet ist und zur Aufnahme der ersten schraubstockähnlichen Vorrichtung bestimmt ist, wobei die dritte Bohrung (12) die zweite axiale Bohrung (10) etwa im rechten Winkel angreift.

17. Die Struktur (1) gemäß den Ansprüchen 1 und 4, **dadurch gekennzeichnet, dass** die erste Schraube (14), die etwa so lang wie die dritte Bohrung (12) ist, einen zweiten Kopf umfasst, der einen größeren Durchmesser als die vierte Bohrung (15a) aufweist und in einem komplementär geformten vierten Fach (16), das in Bezug auf die vierte Bohrung (15a) koaxial geformt ist und nach außen weist, untergebracht werden kann.

18. Die Struktur (1) gemäß den Ansprüchen 4 und 17, **dadurch gekennzeichnet, dass** die erste Schraube (14) einen zweiten Schaft (14b) umfasst, der axial von dem zweiten Kopf hervorsteht und an seinem freien Ende zumindest teilweise ein Gewinde aufweist, um eine lösbare Verbindung mit der fünften Bohrung (15b), die innen ein komplementäres Gewinde aufweist, zu erreichen.

19. Die Struktur (1) gemäß einem oder mehreren der vorhergehenden Ansprüche, **dadurch gekennzeichnet, dass** der erste Körper (8) erste rotationsverhindernde Elemente für das Paar von ersten Klauen (13a, 13b) umfasst, um den Klauen nur eine seitliche Bewegung, in entgegengesetzten Richtungen, entlang der dritten radialen Bohrung zu ermöglichen.

20. Die Struktur (1) gemäß den Ansprüchen 4 und 19, **dadurch gekennzeichnet, dass** die ersten rotationsverhindernden Elemente von einem Paar erster Gewindestifte (17a, 17b) gebildet sind, die in komplementäre sechste Gewindebohrungen (18a, 18b), die in dem ersten Körper (8) entlang zweier Achsen ausgebildet sind, die parallel zueinander sind und etwa rechtwinklig zu der zweiten Bohrung (10) und der dritten Bohrung (12) sind, eingeschraubt werden können.

21. Die Struktur (1) gemäß den Ansprüchen 4 und 20, **dadurch gekennzeichnet, dass** die sechsten Bohrungen (18a, 18b) die dritte radiale Bohrung an den ersten Klauen (13a, 13b) angreift, wobei die freien Enden der ersten Stifte (17a, 17b) selektiv mit Schlitzen oder ersten längsverlaufenden Aussparungen (19a, 19b), die entlang der äußeren Oberfläche der ersten Klauen (13a, 13b) ausgebildet sind, zusammenwirken.

22. Die Struktur (1) gemäß einem oder mehreren der vorhergehenden Ansprüche, **dadurch gekennzeichnet, dass** der zweite Schaft (14b) der ersten Schraube (14) geeignet ist, wenn der erste Körper (8) koaxial mit dem ersten Traktionselement (9) assoziiert ist, seitlich zu den Armen des ersten U-förmigen Kopfes des ersten Traktionselement (9) untergebracht zu werden.

23. Die Struktur (1) gemäß einem oder mehreren der vorhergehenden Ansprüche, **dadurch gekennzeichnet, dass** die ersten Klauen (13a, 13b) erste einander zugewandte Enden aufweisen, die in Bezug auf die Seitenflächen des ersten Kopfes (9b) des ersten Traktionselements (9) komplementär gezahnt sind.

24. Die Struktur (1) gemäß den Ansprüchen 4 und 23, **dadurch gekennzeichnet, dass** eine Drehung der ersten Schraube (14) seitens des Benutzers die koordinierte Bewegung des Paars erster Klauen (13a, 13b) in Richtung der gezahnten seitlichen Flächen des ersten Kopfes (9b) des Traktionselements zulässt, um die temporäre Verriegelung des Traktionselements innerhalb der zweiten axialen Bohrung (10) zuzulassen.

25. Die Struktur (1) gemäß einem oder mehreren der vorhergehenden Ansprüche, **dadurch gekennzeichnet, dass** der erste Körper (8) in Bezug auf die zentrale Querebene im Wesentlichen symmetrisch ist, um seine Verbindung mit dem Werkstück (50) mittels der zweiten Befestigungsmittel, die den ersten Befestigungsmitteln ähnlich sind, zuzulassen.

26. Die Struktur (1) gemäß einem oder mehreren der vorhergehenden Anspruche, **dadurch gekennzeichnet, dass** der erste Körper (8) in Bezug auf die zentrale Querebene im Wesentlichen symmetrisch ist, um seine Verbindung mit dem zweiten Körper (58) oder der separaten Platte (80) oder der Kuppel (70) mittels der separaten Befestigungsmittel, die das dritte Traktionselement (59) umfassen, zuzulassen.

27. Die Struktur (1) gemäß einem oder mehreren der vorhergehenden Ansprüche, **dadurch gekennzeichnet, dass** eine siebte Durchgangsbohrung radial in dem oberen Bereich des ersten Körpers (8) ausgebildet ist, um die zweite Klemmvorrichtung unterzubringen, etwa im rechten Winkel die zweite axiale Bohrung (10) angreift, und der dritten Bohrung (12) ähnlich und parallel dazu ist.

28. Die Struktur (1) gemäß den Ansprüchen 4 und 27, **dadurch gekennzeichnet, dass** die zweite Klemmvorrichtung von einem Paar zweiter Klauen (23a, 23b) gebildet ist, die innerhalb der siebten Bohrung (22) untergebracht werden können, spiegelsymmetrisch sind, und gegenseitig assoziiert sind, damit sie in entgegengesetzten Richtungen mittels vierten Betätigungsmitteln, die von einer Schraube (24) gebildet sind, die in der gleichen Weise wie die erste Schraube zusammenwirkt, verschiebbar sind.

29. Die Struktur (1) gemäß einem oder mehreren der vorhergehenden Ansprüche, **dadurch gekennzeichnet, dass** der erste Körper (8) zweite rotationsverhindernde Elemente für das Paar zweiter Klauen (23a, 23b) umfasst, die den Klauen (23a, 23b) nur eine Seitenbewegung entlang der siebten Bohrung (22) ermöglichen.

30. Die Struktur (1) gemäß den Ansprüchen 4 und 29, **dadurch gekennzeichnet, dass** die zweiten rotationsverhindernden Elemente bevorzugt ähnlich wie die ersten rotationsverhindernden Elemente sind und ein Paar zweiter Gewindestifte (27a, 27b) umfasst, die in mit komplementären Gewinde versehenden achten Bohrungen (28a, 28b) eingeschraubt werden können, die in einem oberen Bereich ausgebildet sind und in Bezug auf das Paar sechster Bohrungen (18a, 18b) etwa parallel sind, um selektiv in den Längsaussparungen (29a, 29b), die entlang der äußeren Oberfläche der zweiten Klauen (23a, 23b) ausgebildet sind, zusammenzuwirken.

31. Die Struktur (1) gemäß einem oder mehreren der vorhergehenden Ansprüche, **dadurch gekennzeichnet, dass** jeder der zweiten Sitze (34, 60, 81), die in dem Werkstück (50), oder in dem zweiten Körper (58), oder in der separaten Platte (80) ausgebildet sind, eine neunte Bohrung (36) umfasst, die zur lösbaren Verbindung eines dritten mit einem komplementären Gewinde versehenden Schafts (39a) des zweiten Traktionselements (39), innen mit einem Gewinde versehen ist.

32. Die Struktur (1) gemäß den Ansprüchen 4 und 31, **dadurch gekennzeichnet, dass** jeder der zweiten Sitze (34) ein fünftes Fach (35) umfasst, das in einem unteren Bereich mit der neunten Bohrung (36) verbunden ist und einen größeren Durchmesser als die neunte Bohrung (36) aufweist.

33. Die Struktur (1) gemäß den Ansprüchen 4 und 32, **dadurch gekennzeichnet, dass** das fünfte Fach (35) geeignet ist, eine zweite Zentrierhülse (37), die die gleiche Form wie die erste Buchse (7) aufweist, stabil unterzubringen.

34. Die Struktur (1) gemäß einem oder mehreren der vorhergehenden Ansprüche, **dadurch gekennzeichnet, dass** das zweite Traktionselement (39), das in dem zweiten Sitz (34) assoziierbar ist, einen dritten Kopf (39b) aufweist, dessen Form ähnlich der Form des ersten Kopfes (9b) ist, um eine lösbare Verbindung zwischen dem Paar von zweiten Klauen (23a, 23b) zuzulassen.

35. Die Struktur (1) gemäß einem oder mehreren der vorhergehenden Ansprüche, **dadurch gekennzeichnet, dass** die Verriegelung des ersten Körpers (8) an dem zweiten Sitz (34) bedingt, den dritten Kopf (39b), der U-förmig ist, innerhalb der zweiten axialen Bohrung zu platzieren und danach die zweite Schraube (24) zu betätigen, um das Paar von zweiten Klauen (23a, 23b) zu schließen.

36. Die Struktur (1) gemäß einem oder mehreren der vorhergehenden Ansprüche, **dadurch gekennzeichnet, dass** sie die modulare Benutzung von zwei oder mehreren Körpern, die dem ersten Körper (8) ähnlich sind, bereitstellt, um eine Reihenanordnung bereitzustellen, die zum Vergrößern des Abstands zwischen der Platte (2) und dem daran verbundenen Element, wie z.B. das Werkstück (50), oder die Kuppel (70) oder die separate Platte (80), geeignet ist.

37. Die Struktur (1) gemäß den Ansprüchen 4 und 36, **dadurch gekennzeichnet, dass** ein zweiter Körper (58), ähnlich wie der erste Körper (8), mittels der separaten Befestigungsmittel über dem ersten Körper (8) assoziierbar ist.

38. Die Struktur (1) gemäß den Ansprüchen 4 und 37, **dadurch gekennzeichnet, dass** die separaten Befestigungsmittel eine dritte Zentrierhülse (57) umfassen, die im Wesentlichen ringförmig ist und zumindest teilweise in dem dritten Fach (10b) des ersten Körpers (8) untergebracht werden kann.

39. Die Struktur (1) gemäß den Ansprüchen 4 und 38, **dadurch gekennzeichnet, dass** die dritte Buchse (57), die komplementär zu dem dritten Fach (10b) in einem unteren Bereich ausgebildet ist, in Bezug auf ihre zentrale Querebene symmetrisch ist.

40. Die Struktur (1) gemäß einem oder mehreren der vorhergehenden Ansprüche, **dadurch gekennzeichnet, dass** die Enden des dritten Traktionselements (59) von einem vierten unteren Kopf (59a) und von einem fünften oberen Kopf (59b) gebildet sind, die zur Verbindung mit dem ersten Körper (8) bzw. dem Element, wie z.B. das Werkstück (50), oder die Kuppel (70), oder die separate Platte (80), geeignet sind.

41. Die Struktur (1) gemäß den Ansprüchen 4 und 40, **dadurch gekennzeichnet, dass** das dritte Traktionselements (59), das koaxial zu der dritten Buchse (57) angeordnet ist, in Bezug auf seine zentrale Querebene spiegelsymmetrisch ist.

42. Die Struktur (1) gemäß den Ansprüchen 4 und 40, **dadurch gekennzeichnet, dass** die vierten und fünften Köpfe (59a, 59b) des dritten Traktionselements (59) Formen aufweisen, die der Form des dritten Kopfes (39b) des zweiten Traktionselements (39) bzw. des ersten Kopfes (9b) des ersten Traktionselements (9) ähnlich sind, um die lösbare Verbindung zwischen dem Paar von ersten Klauen (13a, 13b) bzw. zwischen einem dritten Paar von Klauen (63a, 63b), die ähnlich dem Paar von ersten Klauen (13a, 13b) des ersten Körpers (8) sind, zu ermöglichen.

43. Die Struktur (1) gemäß den Ansprüchen 4 und 40, **dadurch gekennzeichnet, dass** die vierten und fünften Köpfe (59a, 59b) des dritten Traktionselements (59) Formen aufweisen, die der Form des dritten Kopfes (39b) des zweiten Traktionselements (39) bzw. des ersten Kopfes (9b) des ersten Traktionselements (9) ähnlich sind, um die lösbare Verbindung zwischen dem Paar von ersten Klauen (13a, 13b) bzw. zwischen einem separaten Paar von Klauen der Kuppel (70) oder der separaten Platte (80), zu ermöglichen.

44. Die Struktur (1) gemäß einem oder mehreren der vorhergehenden Ansprüche, **dadurch gekennzeichnet, dass** der zweite Körper (58) an dem zweiten Sitz (34) des Werkstückes (50) mittels der Einrückung des zweiten Traktionselements (39), das zwischen dem zweiten Sitz (34) und dem zweiten Körper (58) koaxial zu der zweiten Buchse (37) angeordnet ist.

45. Die Struktur (1) gemäß Anspruch 2, **dadurch gekennzeichnet, dass** sie die Kuppel (70) umfasst, in dessen seitlichen und/oder oberen Wänden die Sitze ausgebildet sind, wobei die Sitze etwa die gleiche Form und Abmessungen wie die ersten Sitze (4) der Platte (2) aufweisen.

46. Die Struktur (1) gemäß den Ansprüchen 4 und 45, **dadurch gekennzeichnet, dass** die Kuppel (70), die wie ein Parallelflächner geformt ist, in dem unteren Bereich ein oder mehrere Paare separater Klauen umfasst, die dem Paar von ersten Klauen (13a, 13b) zur Verbindung von zwei oder mehreren ersten unteren Körpern ähnlich sind.

47. Die Struktur (1) gemäß den Ansprüchen 4 und 45, **dadurch gekennzeichnet, dass** das Werkstück (50) seitlich oder in einem oberen Bereich mit der Kuppel (70) assoziiert werden kann, indem separate Körper verwendet werden, die den ersten und/oder zweiten Körpern (8, 58) ähnlich sind.

48. Die Struktur (1) gemäß Anspruch 2, **dadurch gekennzeichnet, dass** sie die separate Platte (80) umfasst, die mindestens in einem oberen Bereich mit einer Mehrzahl von Sitzen (81) bereitgestellt ist, dessen Form und Abmessungen etwa denen der ersten Sitze (4) der Platte (2) entsprechen.

49. Die Struktur (1) gemäß den Ansprüchen 4 und 48, **dadurch gekennzeichnet, dass** die Sitze (71, 81) gemäß einer gitterähnlichen modularen Konfiguration oder gemäß eines rechteckigen Netzes, welche einen geringeren Abstand als der Abstand der ersten Sitze (4) aufweisen, angeordnet sind.

50. Die Struktur (1) gemäß den Ansprüchen 4 und 48, **dadurch gekennzeichnet, dass** die separate Platte (80), die rechteckig ist, in einem unteren Bereich ein oder mehrere Paare von separaten Klauen, die dem Paar von ersten Klauen (13a, 13b) ähnlich sind, zur Verbindung von zwei oder mehreren ersten unteren Körpern umfasst.

51. Die Struktur (1) gemäß den Ansprüchen 4 und 48, **dadurch gekennzeichnet, dass** das Werkstück (50) in einem oberen Bereich mit der Kuppel (70) assoziiert werden kann, indem separate Körper verwendet werden, die den ersten und/oder zweiten Körpern (8, 58) ähnlich sind.

## Revendications

1. Structure modulaire (1), pour monter, sur des dispositifs de retenue, des flans (50) présentant au moins un siège (34), ladite structure modulaire (1) comprenant au moins une plaque plate (2) qui présente une pluralité de premiers sièges (4) pour une connexion amovible de premiers moyens de fixation pour au moins un premier corps (8) et des deuxièmes moyens de fixation temporaire permettant une connexion amovible du premier corps (8) audit flan (50) **caractérisée en ce que** lesdits deuxièmes moyens de fixation temporaire permettent la connexion de ladite structure modulaire (1) audit siège (34) formé dans ledit flan (50) et **en ce qu'**elle comprend en outre une première douille de centrage (7) pour le centrage automatique du dit premier corps (8) par rapport audit premier siège (4), ladite première douille (7) ayant une première partie (7a) qui peut être connectée audit premier siège (4) et une deuxième partie supérieure tronconique (7b) qui présente une surface périmétrique externe approximativement tronconique qui fait saillie au-dessus de la plaque (2) une fois réalisée la connexion entre le premier siège (4) et la douille (7), ladite deuxième partie supérieure tronconique (7b) présentant une surface inférieure directement en contact avec une surface supérieure de ladite plaque plate (2), lesdits premiers moyens pour fixer ledit premier corps (8) à ladite plaque (2) comprennent un premier élément de traction (9) pour la connexion entre ledit premier siège (4) et ledit premier corps (8) et un premier dispositif en forme d'étau, qui est associé avec ledit premier corps (8), de sorte à bloquer temporairement ledit premier élément de traction (9) ledit premier corps (8), qui est cylindrique, présente un deuxième trou axial (10) pour le logement partiel du dit premier (9) et/ou deuxième (39) éléments de traction et comprend, dans la région inférieure, un troisième trou traversant (12) qui est formé radialement et qui est destiné à recevoir ledit premier dispositif en forme d'étau, ledit troisième trou (12) affectant ledit deuxième trou axial (10) approximativement à angle droit, ledit premier dispositif en forme d'étau est constitué par une paire de premières mâchoires (13a, 13b), qui peuvent être reçues à l'intérieur du dit troisième trou (12) et sont agencées de façon spéculaire dans des positions mutuelles diamétralement opposées, et lesdites premières mâchoires (13a, 13b), qui sont sensiblement cylindriques, sont mutuellement associables par l'intermédiaire de moyens d'activation, qui sont constitués par une première vis (14), qui est agencée coaxialement à un quatrième trou (15a) et à un cinquième trou (15b) qui sont des trous traversants et qui sont formés axialement le long de ladite paire de premières mâchoires (13a, 13b).

2. Structure (1) selon la revendication 1, **caractérisée en ce que** lesdits deuxièmes moyens de fixation temporaire permettent une connexion amovible du dit premier corps (8) à un siège (71, 81) formé respectivement dans une tourelle (70) ou dans une plaque séparée (80).

3. Structure (1) selon la revendication 1, **caractérisée en ce que** lesdits deuxièmes moyens de fixation temporaire permettent une connexion amovible du dit premier corps (8) à un siège séparé (60) formé dans un deuxième corps (58).

4. Structure (1) selon une ou plusieurs des revendications précédentes, **caractérisée en ce que** ledit premier corps (8) présente au moins deux surfaces qui sont plates et qui sont appropriées pour l'appui de ladite plaque (2) et/ou du dit flan (50) sur celles-ci.

5. Structure (1) selon la revendication 4, **caractérisée en ce que** lesdits deuxièmes moyens de fixation du dit premier corps (8) audit flan (50) comprennent un deuxième élément de traction (39) pour la connexion entre ledit deuxième siège (34) et ledit premier corps (8).

6. Structure (1) selon les revendications 1 et 4, **caractérisée en ce que** lesdits deuxièmes moyens de fixation du dit premier corps (8) audit deuxième siège (34) comprennent un deuxième dispositif en forme d'étau qui est associé audit premier corps (8), de sorte à bloquer temporairement ledit deuxième élément de traction (39).

7. Structure (1) selon une ou plusieurs des revendications précédentes, **caractérisée en ce que** ladite plaque (2) présente au moins au niveau de la surface supérieure une gille constituée par lesdits premiers sièges (4), qui sont agencés selon une configuration modulaire en grille, ou selon une maille rectangulaire.

8. Structure (1) selon une ou plusieurs des revendications précédentes, **caractérisée en ce que** chacun des dits premiers sièges (4) comprend un premier trou (6), qui est fileté intérieurement pour la connexion amovible d'une première tige filetée de façon complémentaire (9a) du dit premier élément de traction (9).

9. Structure (1) selon les revendications 4 et 8, **caractérisée en ce que** chacun des dits premiers sièges (4) comprend un premier compartiment (5) qui est connecté dans une région inférieure audit premier trou (6) et qui présente un diamètre plus large que ledit premier trou (6).

10. Structure (1) selon les revendications 4 et 9, **caractérisée en ce que** ledit premier compartiment (5) est approprié pour recevoir de façon stable ladite première partie inférieure (7a) de ladite première douille de centrage (7) qui est conformée comme un anneau circulaire.

11. Structure (1) selon les revendications 1 et 4, **caractérisée en ce que** ledit deuxième trou axial traversant (10) présente, à ses extrémités, un deuxième compartiment (10a) et un troisième compartiment (10b) qui sont tronconiques et qui sont conçus pour contenir partiellement respectivement ladite première douille (7) et une deuxième douille séparée (37) qui est associable dans ledit deuxième siège (34).

12. Structure (1) selon les revendications 4 et 11, **caractérisée en ce que** ladite deuxième partie (7b) est formée approximativement de façon complémentaire audit deuxième compartiment (10a) du dit deuxième trou axial (10).

13. Structure (1) selon une ou plusieurs des revendications précédentes, **caractérisée en ce que** l'insertion du dit premier élément de traction (9) dans ledit deuxième trou (10) produit un contact entre les surfaces périmétriques du dit deuxième compartiment (10a) et les surfaces périmétriques de ladite deuxième partie (7b) de ladite douille (7) de sorte à centrer automatiquement ledit premier corps (8) par rapport audit premier siège (4).

14. Structure (1) selon une ou plusieurs des revendications précédentes, **caractérisée en ce que** ledit premier élément de traction (9) comprend une première tête (9b) qui fait saillie axialement et dans une région supérieure par rapport à ladite première tige (9a) et est approximativement en forme de U.

15. Structure (1) selon les revendications 4 et 14, **caractérisée en ce que** ladite première tête (9b) du dit premier élément de traction (9) est dentée au niveau de ses faces latérales, formées par la jointure des bras latéraux et de la traverse centrale qui forment ladite forme en U.

16. Structure (1) selon une ou plusieurs des revendications précédentes, **caractérisée en ce que** dans la région inférieure du dit premier corps (8), se trouve un troisième trou traversant (12) qui est formé radialement et qui est destiné à recevoir ledit premier dispositif en forme d'étau, ledit troisième trou (12) affectant ledit deuxième trou axial (10) approximativement à angle droit.

17. Structure (1) selon les revendications 1 et 4, **caractérisée en ce que** ladite première vis (14), qui est approximativement aussi longue que ledit troisième trou (12), comprend une deuxième tête, qui présente un diamètre plus large que ledit quatrième trou (15a) et peut être reçue dans un quatrième compartiment (16) conformé de façon complémentaire qui est formé coaxialement par rapport audit quatrième trou (15a) et est dirigé vers l'extérieur.

18. Structure (1) selon les revendications 4 et 17, **caractérisée en ce que** ladite première vis (14) comprend une deuxième tige (14b) qui fait saillie axialement de ladite deuxième tête et qui est au moins partiellement filetée au niveau de son extrémité libre de sorte à réaliser une connexion amovible audit cinquième trou (15b) qui est intérieurement fileté de façon complémentaire.

19. Structure (1) selon une ou plusieurs des revendications précédentes, **caractérisée en ce que** ledit premier corps (8) comprend des premiers éléments anti-rotation pour ladite paire de premières mâchoires (13a, 13b) de sorte à permettre aux dites mâchoires d'exécuter uniquement un mouvement translationnel, dans des directions opposées, le long du dit troisième trou radial.

20. Structure (1) selon les revendications 4 et 19, **caractérisée en ce que** lesdits premiers éléments anti-rotation sont constitués par une paire de premières broches filetées (17a, 17b) qui peuvent être vissées à l'intérieure de sixièmes trous (18a, 18b) filetés de façon complémentaire formés dans ledit premier corps (8) le long de deux axes qui sont parallèles l'un à l'autre et qui sont approximativement perpendiculaires audit deuxième trou (10) et audit troisième trou (12).

21. Structure (1) selon les revendications 4 et 20, **caractérisée en ce que** lesdits sixièmes trous (18a, 18b) affectent ledit troisième trou radial au niveau des dites premières mâchoires (13a, 13b), les extrémités libres des dites premières broches (17a, 17b) interagissant de façon sélective avec des fentes ou premiers évidements longitudinaux (19a, 19b) formés le long de la surface externe des dites premières mâchoires (13a, 13b).

22. Structure (1) selon une ou plusieurs des revendications précédentes, **caractérisée en ce que** ladite deuxième tige (14b) de ladite première vis (14) est appropriée pour être reçue, lorsque ledit premier corps (8) est associé coaxialement audit premier élément de traction (9), transversalement aux bras de ladite première tête en forme de U du dit premier élément de traction (9).

23. Structure (1) selon une ou plusieurs des revendications précédentes, **caractérisée en ce que** lesdites premières mâchoires (13a, 13b) présentent des premières extrémités se faisant face mutuellement, qui sont dentées de façon complémentaire par rapport aux faces latérales de ladite première tête (9b) du dit premier élément de traction (9).

24. Structure (1) selon les revendications 4 et 23, **caractérisée en ce qu'**une rotation de ladite première vis (14) de la part de l'opérateur permet le déplacement coordonné de ladite paire de premières mâchoires (13a, 13b) vers les faces latérales dentées de ladite première tête (9b) du dit premier élément de traction, de sorte à permettre le blocage temporaire du dit élément de traction dans ledit deuxième trou axial (10).

25. Structure (1) selon une ou plusieurs des revendications précédentes, **caractérisée en ce que** ledit premier corps (8) est sensiblement symétrique par rapport au plan transversal central de sorte à permettre sa connexion à ledit flan (50) par l'intermédiaire des dits deuxièmes moyens de fixation qui sont similaires aux dits premiers moyens de fixation.

26. Structure (1) selon une ou plusieurs des revendications précédentes, **caractérisée en ce que** ledit premier corps (8) est sensiblement symétrique par rapport au plan transversal central de sorte à permettre sa connexion audit deuxième corps (58) ou à ladite plaque séparée (80) ou tourelle (70) par l'intermédiaire des dits moyens de fixation séparés qui comprennent ledit troisième élément de traction (59).

27. Structure (1) selon une ou plusieurs des revendications précédentes, **caractérisée en ce qu'**un septième trou traversant est formé radialement dans la région supérieure du dit premier corps (8) afin de recevoir ledit deuxième dispositif à pince, affecte approximativement à angle droit ledit deuxième trou axial (10) et est similaire audit troisième trou (12) et parallèle à celui-ci.

28. Structure (1) selon les revendications 4 et 27, **caractérisée en ce que** ledit deuxième dispositif à pince est constitué par une paire de deuxièmes mâchoires (23a, 23b) qui peuvent être reçues à l'intérieur du dit septième trou (22), sont spéculaires et sont mutuellement associés de sorte à pouvoir coulisser dans des directions opposées par l'intermédiaire de quatrièmes moyens d'activation qui sont constitués par une deuxième vis (24) qui interagit de la même manière que ladite première vis (14).

29. Structure (1) selon une ou plusieurs des revendications précédentes, **caractérisée en ce que** ledit premier corps (8) comprend des deuxièmes éléments anti-rotation pour ladite paire de deuxièmes mâchoires (23a, 23b) qui permettent aux dites mâchoires (23a, 23b) d'exécuter uniquement un mouvement translationnel le long du dit septième trou (22).

30. Structure (1) selon les revendications 4 et 29, **caractérisée en ce que** lesdits deuxièmes éléments anti-rotation sont de préférence similaires aux dits premiers éléments anti-rotation et comprennent une paire de deuxièmes broches filetées (27a, 27b) qui peuvent être vissées dans des huitièmes trous (28a, 28b) filetés de façon complémentaire formés dans une région supérieure et approximativement parallèle par rapport à ladite paire de sixièmes trous (18a, 18b) de sorte à interagir de façon sélective dans lesdits évidements longitudinaux (29a, 29b) formés le long de la surface externe des dites deuxièmes mâchoires (23a, 23b).

31. Structure (1) selon une ou plusieurs des revendications précédentes, **caractérisée en ce que** chacun des dits deuxièmes sièges (34, 60, 81) formés dans ledit flan (50) ou dans ledit deuxième corps (58) ou dans ladite plaque séparée (80), comprend un neuvième trou (36) qui est fileté intérieurement pour la connexion amovible d'une troisième tige (39a) filetée de façon complémentaire du dit deuxième élément de traction (39).

32. Structure (1) selon les revendications 4 et 31, **caractérisée en ce que** chacun des dits deuxièmes sièges (34) comprend un cinquième compartiment (35) qui est connecté dans une région inférieure audit neuvième trou (36) et présente un diamètre plus large que ledit neuvième trou (36).

33. Structure (1) selon les revendications 4 et 32, **caractérisée en ce que** ledit cinquième compartiment (35) est approprié pour recevoir de façon stable une deuxième douille de centrage (37) qui présente la même forme que ladite première douille (7).

34. Structure (1) selon une ou plusieurs des revendications précédentes, **caractérisée en ce que** ledit deuxième élément de traction (39) qui est associable dans ledit deuxième siège (34) présente une troisième tête (39b) dont la forme est similaire à la forme de ladite première tête (9b) afin de permettre une connexion amovible entre ladite paire de deuxièmes mâchoires (23a, 23b).

35. Structure (1) selon une ou plusieurs des revendications précédentes, **caractérisée en ce que** le blocage du dit premier corps (8) au niveau du dit deuxième siège (34) entraîne le placement de ladite troisième tête (39b), qui est en forme de U, dans ledit deuxième trou axial (10) et consécutivement l'activation de ladite deuxième vis (24) de sorte à fermer ladite paire de deuxièmes mâchoires (23a, 23b).

36. Structure (1) selon une ou plusieurs des revendications précédentes, **caractérisée en ce qu'**elle fournit l'utilisation modulaire de deux ou plusieurs corps similaires audit premier corps (8) de sorte à fournir un agencement en série qui est approprié pour augmenter la distance entre ladite plaque (2) et l'élément connecté à celle-ci tel que ledit flan (50) ou ladite tourelle (70) ou ladite plaque séparée (80).

37. Structure (1) selon les revendications 4 et 36, **caractérisée en ce qu'**un deuxième corps (58) similaire audit premier corps (8) est associable au-dessus du dit premier corps (8) par l'intermédiaire des dits moyens de fixations séparés.

38. Structure (1) selon les revendications 4 et 37, **caractérisée en ce que** lesdits éléments de fixation séparés comprennent une troisième douille de centrage (57) qui est sensiblement annulaire et peut être reçue au moins partiellement dans ledit troisième compartiment (10b) du dit premier corps (8).

39. Structure (1) selon les revendications 4 et 38, **caractérisée en ce que** ladite troisième douille (57), qui est formée de façon complémentaire audit troisième compartiment (10b) dans une région inférieure, est symétrique par rapport à son plan transversal central.

40. Structure (1) selon une ou plusieurs des revendications précédentes, **caractérisée en ce que** les extrémités du dit troisième élément de traction (59) sont constituées par une quatrième tête inférieure (59a) et par une cinquième tête supérieure (59b) qui sont appropriées pour une connexion respectivement audit premier corps (8) et audit élément tel que ledit flan (50) ou ladite tourelle (70) ou ladite plaque séparée (80).

41. Structure (1) selon les revendications 4 et 40, **caractérisée en ce que** ledit troisième élément de traction (59) agencé coaxialement à ladite troisième douille (57) est spéculaire par rapport à son plan transversal central.

42. Structure (1) selon les revendications 4 et 40, **caractérisée en ce que** lesdites quatrième et cinquième têtes (59a, 59b) du dit troisième élément de traction (59) présentent des formes qui sont similaires à celles respectivement, de ladite troisième tête (39b) du dit deuxième élément de traction (39) et de ladite première tête (9b) du dit premier élément de traction (9) de sorte à permettre une connexion amovible respectivement entre ladite paire de premières mâchoires (13a, 13b) et entre une troisième paire de mâchoires (63a, 63b) qui sont similaires à ladite paire de premières mâchoires (13a, 13b) du dit premier corps (8).

43. Structure (1) selon les revendications 4 et 40, **caractérisée en ce que** lesdites quatrièmes et cinquièmes têtes (59a, 59b) du dit troisième élément de traction (59) présentent des formes qui sont similaires respectivement, aux formes de ladite troisième tête (39b) du dit deuxième élément de traction (39) et de ladite première tête (9b) du dit premier élément de traction (9) de sorte à permettre une connexion amovible respectivement entre ladite paire de premières mâchoires (13a, 13b) et entre une paire séparée de mâchoires de ladite tourelle (70) ou de la plaque séparée (80).

44. Structure (1) selon une ou plusieurs des revendications précédentes, **caractérisée en ce que** ledit deuxième corps (58) peut être fixé au niveau du dit deuxième siège (34) de ledit flan (50) par l'intermédiaire de l'engagement du dit deuxième élément de traction (39), agencé coaxialement à ladite deuxième douille (37), entre ledit deuxième siège (34) et ledit deuxième corps (58).

45. Structure (1) selon la revendication 2, **caractérisée en ce qu'**elle comprend ladite tourelle (70), sur les parois latérales et/ou supérieures sur lesquelles lesdits sièges sont formés, lesdits sièges ayant approximativement les mêmes formes et dimensions que lesdits premiers sièges (4) de ladite plaque (2).

46. Structure (1) selon les revendications 4 et 45, **caractérisée en ce que** ladite tourelle (70) qui est conformée comme un parallélépipède comprend dans une région inférieure une ou plusieurs paires de mâchoires séparées qui sont similaires à ladite paire de premières mâchoires (13a, 13b) pour la connexion de deux ou plusieurs premiers corps inférieurs.

47. Structure (1) selon les revendications 4 et 45, **caractérisée en ce que** ledit flan (50) peut être associé, latéralement ou dans une région supérieure, avec ladite tourelle (70) en utilisant des corps séparés qui sont similaires aux dits premiers et/ou deuxièmes corps (8, 58).

48. Structure (1) selon la revendication 2, **caractérisée en ce qu'**elle comprend ladite plaque séparée (80) qui est munie au moins dans une région supérieure d'une pluralité des dits sièges (81) dont les formes et dimensions sont approximativement égales à celles des dits premiers sièges (4) de ladite plaque (2).

49. Structure (1) selon les revendications 4 et 48, **caractérisée en ce que** lesdits sièges (71, 81) sont agencés selon une configuration modulaire en grille ou selon une maille rectangulaire qui présente un espacement plus petit que l'espacement entre lesdits premiers sièges (4).

50. Structure (1) selon les revendications 4 et 48, **caractérisée en ce que** ladite plaque séparée (80), qui est rectangulaire, comprend dans une région inférieure une ou plusieurs paires de mâchoires séparées qui sont similaires à ladite paires de premières mâchoires (13a, 13b) pour la connexion de deux ou plusieurs premiers corps inférieurs.

51. Structure (1) selon les revendications 4 et 48, **caractérisée en ce que** ledit flan (50) peut être associé dans une région supérieure avec ladite tourelle (70) en utilisant des corps séparés qui sont similaires aux dits premiers et/ou deuxièmes corps (8, 58).
